# EUROPÄISCHE PATENTANMELDUNG

(11) **EP 3 542 685 A1**
(43) Veröffentlichungstag der Anmeldung: **25.09.2019**
(21) Anmeldenummer: 19164626.4
(22) Anmeldetag: 22.03.2019
(51) Int. Cl.: A47J 37/06

(54) **GRILL**

(30) Priorität: 22.03.2018 DE 202018101593 U
(71) Anmelder: Accente Limited, Wong Tai Sin, KL (HK)
(72) Erfinder: LEE, Wai Sing Rason, Kowloon (HK)
(74) Vertreter: Hoffmann Eitle

(57) **Zusammenfassung**

Erfindungsgemäß ist ein Grill (1) mit
- einem Gehäuse (10) und
- mindestens einem innerhalb einer inneren Aufnahme (12) des Gehäuses (10) vorgesehenen Grillraum (13),
- mindestens einer innerhalb des Gehäuses (10) und oberhalb der Aufnahme (12) angeordneten Brennkammer (11) sowie
- einer Luftversorgungseinrichtung (14),
**dadurch gekennzeichnet,**
- dass die Luftversorgungseinrichtung (14) mehrere im unteren Bereich des Gehäuses (10) vorgesehene Lufteinlässe (140) sowie im oberen Bereich des Gehäuses (10) befindliche Luftauslässe (141) umfasst,
- wobei die Lufteinlässe (140) und die Luftauslässe (141) so angeordnet sind und die innere Aufnahme (12) mit ihren Seitenwänden (120) derart beabstandet von der Innenwandung (100) des Gehäuses (10) die Lufteinlässe (140) ist, dass ein von den Lufteinlässen (141) aufwärts in Richtung Brennkammer (11) gerichteter Luftstrom (1400, 1401, 1402) erzeugt wird, welcher außen an der inneren Aufnahme (12) nach oben in Richtung Brennkammer (11) vorbeiströmt.

## Beschreibung

Die vorliegende Erfindung betrifft einen Grill mit einem Gehäuse und mindestens einem innerhalb einer inneren Aufnahme des Gehäuses vorgesehenen Grillraum, mindestens einer innerhalb des Gehäuses und oberhalb der Aufnahme angeordneten Brennkammer sowie einer Luftversorgungseinrichtung.

Es sind aus dem Stand der Technik Grills bekannt, die mit einem Gehäuse und mindestens einem innerhalb einer inneren Aufnahme des Gehäuses vorgesehenen Grillraum, mindestens einer innerhalb des Gehäuses und oberhalb der Aufnahme angeordneten Brennkammer sowie einer Luftversorgungseinrichtung ausgestattet sind.

Aus dem Stand der Technik sind ferner Gasgrillgeräte mit einem insbesondere gasgespeisten Verbrennungssystem bekannt, das eine extrem hohe Temperatur von bis zu (oder sogar mehr als) 800 °C erreicht und damit schnelleres Garen bietet. Die extrem hohe Temperatur führt zum Beispiel zu einer Karamellisierung der Oberfläche von Grillgut innerhalb sehr kurzer Zeit. Ebenfalls sind Gasgrills bekannt, die eine Oberhitze erzeugen und damit die Wärmequelle, insbesondere den Brenner, vor tropfendem Fett bewahren. Zusammen mit der extremen Hitze und dem schnellen Karamellisierungsprozess wird so der Geschmack des Grillguts optimiert. Es kann keine Flamme durch heruntertropfendes Fett entstehen und den Geschmack verfälschen.

Ein Problem dieser Grills besteht nun darin, dass diese außen am Gehäuse extrem heiß werden und somit eine Gefahrenquelle für Verbrennungen darstellen.

### Darstellung der Erfindung

Der vorliegenden Erfindung liegt die Aufgabe zu Grunde, einen gattungsgemäßen Grill insbesondere betreffend Handhabung, Effizienz und Verträglichkeit zu verbessern und so zu schaffen, dass die vorgenannten Probleme ausgeräumt oder zumindest abgemildert sind.

Erfindungsgemäß wird diese Aufgabe von einem gattungsgemäßen Grill gemäß dem Oberbegriff des Anspruchs 1 in Verbindung mit den kennzeichnenden Merkmalen des Anspruchs 1 gelöst. Vorteilhafte Ausgestaltungen und Weiterbildungen des erfindungsgemäßen Grills sind in den Unteransprüchen angegeben.

Gattungsgemäß ist ein Grill mit einem Gehäuse und mindestens einem innerhalb einer inneren Aufnahme des Gehäuses vorgesehenen Grillraum (vorzugsweise im oberen Bereich der inneren Aufnahme, zum Beispiel so dass im unteren Bereich der inneren Aufnahme etwa eine Auffangschale für vom Grillgut hinabtropfendes Fett angeordnet sein kann), mindestens einer innerhalb des Gehäuses und oberhalb der Aufnahme angeordneten Brennkammer sowie einer Luftversorgungseinrichtung ausgestattet sind. Erfindungsgemäß ist ein Grill der eingangs genannten Art dadurch gekennzeichnet, dass die Luftversorgungseinrichtung mehrere im unteren Bereich des Gehäuses vorgesehene Lufteinlässe sowie im oberen Bereich des Gehäuses befindliche Luftauslässe umfasst, wobei die innere Aufnahme mit ihren Seitenwänden derart beabstandet von der Innenwandung des Gehäuses die Lufteinlässe ist, dass ein von den Lufteinlässen, möglicherweise von unterhalb zum Beispiel eines Grillgutträgers im Grillraum, aufwärts in Richtung Brennkammer und so auch in die Brennkammer gerichteter, und dorthin vorzugsweise auch mindestens teilweise gelangender, Luftstrom erzeugt wird, welcher außen vorzugsweise beidseitig an der inneren Aufnahme nach oben in Richtung Brennkammer vorbeiströmt.

Die vorliegende Aufgabe wird somit dadurch gelöst, dass insbesondere am äußeren Gehäuse eingebrachte Löcher die Luftzirkulation entsprechend beeinflussen und ein Sekundärbrennsystem bewirken. Sauerstoff wird durch die oben ausströmende Luft unten angesaugt und so der Brenner mit zusätzlichem Sauerstoff gespeist. Die strömende Luft führt auch dazu, dass das äußere Gehäuse nicht mehr so heiß wird, wie bei bekannten Modellen.

Weitere Ziele, Merkmale, Vorteile und Anwendungsmöglichkeiten des erfindungsgemäßen Grills ergeben sich aus der nachfolgenden Beschreibung eines Ausführungsbeispiels anhand der Zeichnungen. Dabei bilden alle beschriebenen und/oder bildlich dargestellten Merkmale für sich oder in beliebiger Kombination eine jeweilige Ausgestaltung der Erfindung, unabhängig auch von ihrer Zusammenfassung hier in der Beschreibung oder Gruppierung etwa in Beispielen, in einzelnen Ansprüchen oder deren Rückbeziehungen.

In den Zeichnungen zeigen schematisch
- Fig. 1: einen erfindungsgemäßen Grill in einer Frontansicht, teilweise aufgebrochen;
- Fig. 2: den Grill in einer Seitenansicht, teilweise aufgebrochen;
- Fig. 3: den Grill in der Rückansicht, teilweise aufgebrochen.

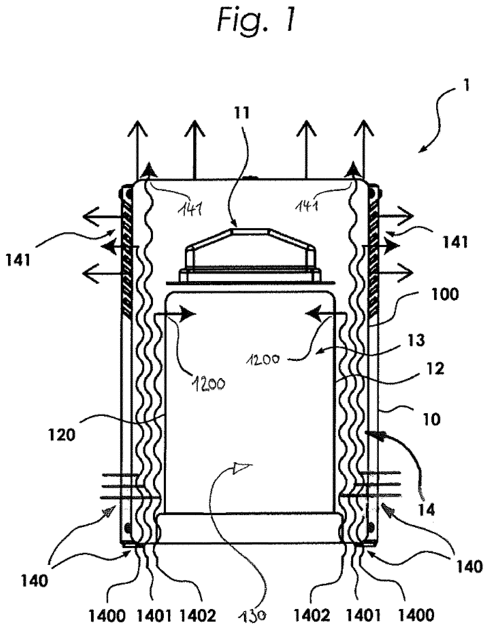

Wie aus Fig. 1 ersichtlich, umfasst der erfindungsgemäße Grill 1 ein Gehäuse 10 und mindestens einen innerhalb einer inneren Aufnahme 12 des Gehäuses 10 vorgesehenen Grillraum 13, mindestens eine innerhalb des Gehäuses 10 und oberhalb der Aufnahme 12 angeordnete Brennkammer 11 sowie eine Luftversorgungseinrichtung 14.

Die Luftversorgungseinrichtung 14 umfasst beidseitig am Gehäuse 10 in ihrem unteren Bereich seitlich und unterseitig am Boden Lufteinlässe 140 sowie im oberen Bereich des Gehäuses 10 seitlich und oberseitig Luftauslässe 141.

Die innere Aufnahme 12 ist mit ihren Seitenwänden 120 von Innenwandungen 100 des Gehäuses 10 derart beabstandet, dass ein von den Lufteinlässen 140 und so vom unteren Bereich der inneren Aufnahme 12, insbesondere von unterhalb des Grillraums 13 oben in der inneren Aufnahme 12, in Richtung Brennkammer 11, also aufwärts gerichteter Luftstrom 1400, 1401, 1402 erzeugt wird, welcher außen beidseitig (Fig. 1) an der inneren Aufnahme 12 nach oben in Richtung Brennkammer 11 entlang und vorbeiströmt.

Bezug nehmend auf Fig. 1 erreicht dies, dass das äußere Gehäuse 10 eine kühlere Oberfläche aufweist - und zusätzlich eine sekundäre Verbrennung, indem ein Teilstrom 1402 der nach oben gehenden (von den Seitenwänden 120 der inneren Aufnahme 12 erwärmten) Luft 1400, 1401, 1402 von unten hoch und durch die Lufteinlässe 1200 in den Seitenwänden 120 in die innere Aufnahme 12 zur Sekundärverbrennung einströmt. Andere Teile des aufgeheizten, so aufsteigenden Luftstroms 1400, 1401, 1402, nämlich die aufgeheizte Luft 1400, 1401 wird (zusammen mit Teilen der im Gehäuse 10 bei der Verwendung des Grills 1 erzeugten Wärme) freigesetzt. Die Verbrennung wird vollständiger, es wird weniger Kohlenmonoxid freigesetzt und eine höhere Temperatur in der Brennkammer erreicht.

Besonders vorteilhaft sind also auch die Luftauslässe 141, an denen die Luft 1400, 1401 aus dem Gehäuse 10 nach außen tritt, wobei jede Seite eine ähnliche oder im Ausführungsbeispiel sogar gleiche Anzahl von Luftauslässen 141 aufweist, der Grill 1 nämlich insgesamt zueinander spiegelsymmetrische Seiten hat, insgesamt spiegelsymmetrisch ist.

Die vom Brennerrohr kommende (von ihm insbesondere mit dem Einströmen des Brenngases angesaugte) Primärluft 1500 gelangt in die Brennkammer 11 und mischt sich mit dem dorthin zugeleiteten, dort befindlichen brennbaren Gas. Ein Großteil der Wärme, die dort erzeugt wird, fließt nach der Verbrennung an der Vorderseite der Aufnahme 12 durch die dortige Öffnung 130 des Grillraums 13 nach außen.

Die Brennkammer 11 umfasst mindestens einen Heizstrahler (nicht dargestellt), der an ihrer Oberseite angeordnet ist und Wärme in den Grillraum 13 abgibt, also nach unten abstrahlt, wobei zumindest ein Teil des Heizstrahlers als Injektionssystem ausgeführt ist, bei dem mindestens ein Lufteinlass zur "Stabilisierung" der Sauerstoffmengen führt, die in die Brennkammer 11 eingeführt, eingelassen, eingesaugt und/oder injiziert werden.

Weiterhin sind es die Lufteinlässe 140 im Gehäuse 10 und die zusätzlichen Lufteinlässe 1200 in den Seitenwänden 120 der inneren Aufnahme 12, die die Verbrennung unterstützen, indem die durch sie fließenden Luftströme 1402 den Brennvorgang mit Sauerstoff zusätzlich bedienen und gleichzeitig die heiße Luft ausweichen lassen und hinausdrücken.

Mindestens eine Luftdurchgangsöffnung (nicht dargestellt) kann zwischen Grillraum 13 und Brennkammer 11 im äußeren Gehäuse 10 vorgesehen sein, die so ausgeführt ist, dass die Heißluft besser ausweichen kann und so das äußere Gehäuse 10 weniger erhitzt.

Die Lufteinlässe 140 sind in dem äußeren Gehäuse 10 so angelegt, dass es durch den einströmenden Sauerstoff zu einer unterstützenden Sekundärverbrennung kommt, die den Kohlenmonoxid-Ausstoß beim Grillen deutlich reduziert.

Überdies können Luftdurchlässe (nicht dargestellt) vorgesehen sein, mittels derer mehr Luft in die Brennkammer 11 gelangt, wobei auch zum Beispiel durch mindestens eine Luftdurchtrittsöffnung 150 am Brennerrohr 15 Primärluft 1500 eintritt.

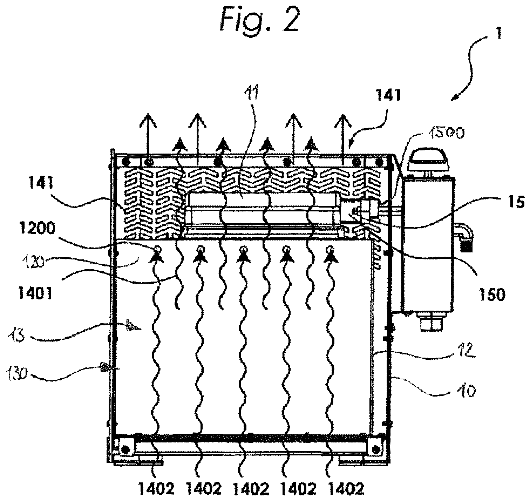

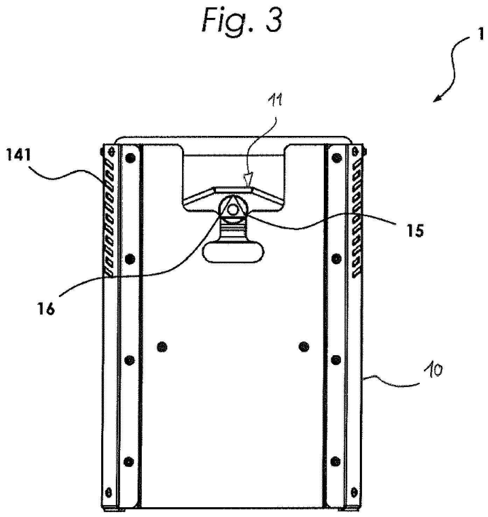

Wie aus Fig. 2 und 3 ersichtlich, gelangt auch Luft zu Luftdurchtrittsöffnungen an einem ebenfalls vorteilhafterweise vorgesehenen Stabilisator 16 oder zu Luftdurchtrittsöffnungen zwischen der Rohrwand 15 und dem Stabilisator 16 als Primärluft zum Brenner.

Der erfindungsgemäße Grill 1 beschränkt sich in seiner Ausführung nicht auf die vorstehend angegebenen bevorzugten Ausführungsformen. Vielmehr sind eine Vielzahl von Ausgestaltungsvariationen denkbar, welche von der dargestellten Lösung auch bei grundsätzlich anders gearteter Ausführung Gebrauch machen.

### Liste der Bezugsziffern

- 1: Grill
- 10: Gehäuse
- 11: Brennkammer
- 12: Innere Aufnahme
- 13: Grillraum
- 14: Luftversorgungseinrichtung
- 15: Brennerrohr
- 16: Stabilisator
- 100: Innenwandung des Gehäuses
- 120: Seitenwände der inneren Aufnahme
- 130: Grillraumöffnung
- 140: Lufteinlässe
- 141: Luftauslässe
- 1200: Lufteinlässe in den Seitenwänden der inneren Aufnahme
- 1400, 1401: Luftstrom
- 1402: Luftstrom für Sekundärverbrennung
- 150: Luftdurchtrittsöffnung am Brennerrohr
- 1500: Luftstrom durch Luftdurchtrittsöffnung am Brennrohr; Primärluft

## Patentansprüche

1. Grill (1) mit
- einem Gehäuse (10) und
- mindestens einem innerhalb einer inneren Aufnahme (12) des Gehäuses (10) vorgesehenen Grillraum (13),
- mindestens einer innerhalb des Gehäuses (10) und oberhalb der Aufnahme (12) angeordneten Brennkammer (11) sowie
- einer Luftversorgungseinrichtung (14),
**dadurch gekennzeichnet,**
- **dass** die Luftversorgungseinrichtung (14) mehrere im unteren Bereich des Gehäuses (10) vorgesehene Lufteinlässe (140) sowie im oberen Bereich des Gehäuses (10) befindliche Luftauslässe (141) umfasst,
- wobei die Lufteinlässe (140) und die Luftauslässe (141) so angeordnet sind und die innere Aufnahme (12) mit ihren Seitenwänden (120) derart beabstandet von der Innenwandung (100) des Gehäuses (10) die Lufteinlässe (140) ist, dass ein von den Lufteinlässen (141) aufwärts in Richtung Brennkammer (11) gerichteter Luftstrom (1400, 1401, 1402) erzeugt wird, welcher außen an der inneren Aufnahme (12) nach oben in Richtung Brennkammer (11) vorbeiströmt.

2. Grill (1) nach Anspruch 1, **dadurch gekennzeichnet, dass** die Brennkammer (11) mindestens einen Heizstrahler umfasst, der an ihrer Oberseite angeordnet ist und Wärme in den Grillraum (13) abgibt, wobei zumindest ein Teil des Heizstrahlers als Injektionssystem ausgeführt ist, bei dem mindestens ein Lufteinlass zur Stabilisierung der Sauerstoffmengen eingerichtet ist, die in die Brennkammer (11) eingeführt werden.

3. Grill (1) nach einem der vorangegangenen Ansprüche,, **dadurch gekennzeichnet, dass** zusätzliche Lufteinlässe vorgesehen sind, die die Verbrennung unterstützen, indem sie den Brennvorgang mit Sauerstoff zusätzlich bedienen und gleichzeitig die heiße Luft ausweichen lassen.

4. Grill (1) nach einem der vorangegangenen Ansprüche, **dadurch gekennzeichnet, dass** mindestens eine Luftdurchgangsöffnung zwischen Grillraum (13) und Brennkammer (11) im äußeren Gehäuse (10) vorgesehen ist, die dazu führt, dass die Heißluft besser ausweichen kann und so das äußere Gehäuse (10) weniger erhitzt.

5. Grill (1) nach einem der vorangegangenen Ansprüche, **dadurch gekennzeichnet, dass** seine Gestalt einschließlich der Lufteinlässe (140) in dem äußeren Gehäuse (10) so angelegt und eingerichtet sind, dass beim Grillen dadurch einströmender Sauerstoff zu einer Sekundärverbrennung beiträgt, die den Kohlenmonoxid-Ausstoß reduziert.

6. Grill (1) nach einem der vorangegangenen Ansprüche, **dadurch gekennzeichnet, dass** die Luftauslässe (141) derart angeordnet sind, dass mittels dieser mehr Luft in die Brennkammer (11) gelangt, wobei durch mindestens eine Luftdurchtrittsöffnung (150) auf dem Brennerrohr (15) Primärluft austritt.

7. Grill (1) nach einem der vorangegangenen Ansprüche, **dadurch gekennzeichnet, dass** Lufteinlässe (1200) in Seitenwänden (120) der inneren Aufnahme (12) derart angeordnet sind, dass ein von den Lufteinlässen (141) aufwärts in Richtung Brennkammer (11) gerichteter Teilstrom (1402) des Luftstroms (1400, 1401, 1402) erzeugt wird, welcher außen an der inneren Aufnahme (12) nach oben und durch die Lufteinlässe (1200) in Seitenwänden (120) in die innere Aufnahme (12) strömt.

8. Grill (1) nach dem vorangegangenen Anspruch, **dadurch gekennzeichnet, dass** seine Gestalt einschließlich der Lufteinlässe (140) in dem äußeren Gehäuse (10) so angelegt und eingerichtet sind, dass der Teilstrom (1402) mindestens teilweise in die Brennkammer (11) strömt.
